# EUROPÄISCHE PATENTSCHRIFT

(11) **EP 3 271 039 B1**
(45) Veröffentlichungstag und Bekanntmachung des Hinweises auf die Patenterteilung: **19.02.2025**
(21) Anmeldenummer: 16710955.2
(22) Anmeldetag: 15.03.2016
(51) Int. Cl.: B01F 27/192, B01F 35/93, B01F 35/90, B01D 9/00, C13B 30/02, C13K 1/10

(54) **RÜHRER FÜR VERDAMPFUNGSKRISTALLISATOR**
STIRRERS FOR CRYSTALLIZING EVAPORATOR
AGITATEUR POUR CRISTALLISATEUR À ÉVAPORATION

(30) Priorität: 19.03.2015 DE 102015205034
(43) Veröffentlichungstag der Anmeldung: 24.01.2018
(73) Patentinhaber: Südzucker AG, 68165 Mannheim (DE)
(72) Erfinder: ARNOLD, Jochen, 67551 Worms (DE)
(74) Vertreter: Wohlfahrt, Jan Günther
(86) Internationale Anmeldenummer: PCT/EP2016/055520
(87) Internationale Veröffentlichungsnummer: WO 2016/146619

(56) Entgegenhaltungen:
- PL-B1- 159 330
- PL-B1- 159 330
- US-A- 3 395 897
- US-A- 3 395 897
- US-A- 328 585
- US-A- 5 223 040
- US-A1- 2010 305 367
- US-A1- 2010 305 367
- DATABASE WPI Week 201377, Derwent World Patents Index; AN 2013-V28163, XP002757627
- DATABASE WPI Week 200305, Derwent World Patents Index; AN 2003-050930, XP002757628
- DATABASE WPI Week 201377, Derwent World Patents Index; AN 2013-V28163, XP002757627
- DATABASE WPI Week 200305, Derwent World Patents Index; AN 2003-050930, XP002757628

## Beschreibung

Diese Erfindung betrifft verbesserte Rührer, geeignet für Verdampfungskristallisatoren besonders zur Kristallisation von Saccharose aus Zuckerrüben-Dicksaft. Die Rührer weisen eines oder mehrere zusätzliche aktiv strömungsleitende Mittel auf.

Verdampfungskristallisatoren werden eingesetzt, zur Gewinnung von Kristallen aus Lösungen oder Suspensionen, indem das Lösungsmittel, insbesondere Wasser daraus abgezogen wird. Durch die Verringerung des Lösungsmittelanteils wird die Kristallisation der in der Lösung oder Suspension enthaltenen kristallisierbaren Stoffe bewirkt. Zum Austreiben des Lösungsmittels wird der Lösung oder Suspension in dem Behälter des Kristallisators Wärme über Wärmetauscher zugeführt, sodass das Lösungsmittel verdampft. Das Lösungsmittel wird im sogenannten Brüdenraum an dem oben gelegenen Abschnitt des Behälters als flüchtiger Dampf oder Nebel abgezogen.

Bekannte Anlagen zur insbesondere diskontinuierlichen Verdampfungskristallisation weisen einen in der Regel vertikal angeordneten Behälter (Tank) auf. An dessen unterem, bodenseitigem Ende ist innenseitig ein Heizelement oder Wärmetauscher angeordnet. Der Wärmetauscher erhitzt die in den Behälter eingebrachte Lösung oder Suspension. Die Lösung wird auch als Sirup, die kristallhaltige Suspension als Magma bezeichnet.

Stand der Technik ist in diesem Zusammenhang ein Rührwerk, bestehend aus Antrieb, Rührerwelle und Rührer, das die Lösung oder Suspension durchmischt und im Wesentlichen zwei Funktionen erfüllt: die Lösung oder Suspension wird durch den Wärmetauscher (Heizkammer) gepumpt, um eine gute Erhitzung und effizientes Austreiben des Lösungsmittelgases in der gesamten Füllung zu erreichen, und die Suspension wird dispergiert, um eine möglichst gleichmäßige und effiziente Kristallisation zu erreichen und insbesondere die Bildung von unerwünschten Kristallaggregaten zu verhindern. Üblicherweise befindet sich der Rührer in dem so genannten "Dispergierbereich", in dem unteren Abschnitt des Behälters, und zwar besonders innerhalb eines Leitrohres oder Zentralrohres. Dort bildet sich bei Rotation des Rührers eine primäre Durchmischungszone aus, und es wird eine primär nach unten gerichtete Strömung bewirkt, um letztlich die Bewegung des Mediums durch die Heizkammer(n), welche von Konvektion und Dampfblasenbildung getrieben ist, zu unterstützen. Dabei ist es vorteilhaft, wenn das Medium in dem Behälter, das heißt die Lösung oder Suspension, in eine möglichst zirkuläre Strömung ausbildet und besonders sämtliches Medium wiederkehrend durch die Heizkammer des Reaktors geführt wird.

US 2010/305367 A1 offenbart einen Reaktor mit einem eine vertikale Welle und Propeller aufweisenden Rührer. PL 159 330 B1 offenbart einen Hochtemperaturkristallisator mit vertikaler Weller und Propeller. Auch CN 103 263 864 A offenbart einen Reaktor mit einem eine vertikale Welle und Propeller aufweisenden Rührer. Die US 3 395 897 A offenbart ein Reaktionsgefäß mit einem Rührmechanismus, der eine geneigte Welle aufweist. JP 2002 282667 A offenbart einen Kristallisationsbehälter mit einer Mischvorrichtung mit einer Vertikalen Welle und Propeller. Die US 5 223 040 A offenbart die Erzeugung von Zuckerkristallen aus Sirup in einem diskontinuierlich arbeitenden Apparat. Die US 328 585 A offenbart die Verwendung von Schrauben zum Mischen.

Kristallisatoren dieser Bauart sind seit langem bekannt. In aktuellen Untersuchungen hat sich jedoch gezeigt, dass die sich einstellende zirkuläre Strömung des Mediums, das heißt der Lösung oder Suspension, insbesondere des Magmas in den verschiedenen Phasen des Prozesses der Verdampfungskristallisation in dem Behälter verbesserungswürdig ist: Es treten besonders bei hohem Füllstand im Behälter, vor allem auch im Bereich der Rührerwelle, Verwirbelungen auf, welche die erwünschte zirkuläre Nettoströmung, die durch ein Aufsteigen des Mediums in der Wandzone des Behälters und durch ein Absteigen des Mediums im Zentralbereich, im Bereich der Rührerwelle, gekennzeichnet sein soll, stören oder im Extremfall verhindern. Dadurch wird die Effizienz der Verdampfungskristallisation vermindert, insbesondere ist die Dispersion oder Gesamtdurchmischung des Mediums in dem Rührreaktor, das heißt insbesondere einer Kristallsuspension (Magma) ein einem Verdampfungskristallisator, verbesserungswürdig.

Zusätzlich besteht das Problem, dass in gattungsgemäßen Rührreaktoren und insbesondere bei Verdampfungskristallisatoren der Rührer in einem sogenannten Zentralrohr geführt wird, um die strömungsleitende Wirkung beziehungsweise Pumpwirkung des Rührers überhaupt zu ermöglichen oder zu verbessern. Ein Zentralrohr umschließt den Rührer in der Regel vollständig und umfasst eine untere Öffnung, wodurch das gepumpte Medium austritt und eine obere Öffnung, worin das Medium in das Zentralrohr eintritt. Um die Pumpwirkung zu ermöglichen, muss der Füllstand des Mediums, das heißt von Lösung oder Suspension, in den Behälter des Verdampfungskristallisators stets oberhalb der oberen Öffnung des Zentralrohrs liegen, und zwar in einem ausreichend großen Maße, um damit eine genügend große Stoffmenge von Lösung oder Suspension in die obere Öffnung des Zentralrohrs fließen kann, um die gewünschte zirkuläre Strömung zu ermöglichen. Nachteilig ist dabei, dass der Verdampfungskristallisator zur Etablierung und Aufrechterhaltung der gewünschten zirkulären oder toroidalen Strömung stets einen entsprechenden Füllungsgrad aufweisen muss. Gerade beim diskontinuierlichen Betrieb schwankt jedoch der Füllungsgrad des Behälters. Fällt dieser unterhalb des Niveaus der oberen Öffnung des Zentralrohrs, sind bekannte Rührer mit Zentralrohr funktionslos und die zirkuläre Strömung bricht ab.

Der Erfindung liegt das Problem zugrunde, diese Nachteile bekannter Rührreaktoren und insbesondere von Kristallisatoren zu überwinden und vor allem mit wenig Energieeintrag eine verbesserte Durchmischung und Dispergierung des Mediums in dem Reaktorbehälter zu bewirken, insbesondere bei der diskontinuierlichen Verdampfungskristallisation.

Die Erfindung löst das technische Problem durch einen Verdampfungskristallisator nach Anspruch 1.

Die Erfindung löst das technische Problem durch einen Verdampfungskristallisator, enthaltend:
- einen vertikalen Reaktorbehälter;
- eine im unteren Bereich des Behälters angeordnete Heizkammer; und
- einen Rührer, zur Umwälzung von zu kristallisierender Lösung oder Suspension in dem Behälter und Zufuhr in die Heizkammer, mit einer von oben her vertikal eingehängten Welle und einem unmittelbar an dem unterem Ende der Welle verbundenen, in einer primären Durchmischungszone des Behälters angeordneten Hauptpropeller,
wobei der Rührer an dieser Welle zu dem Hauptpropeller zusätzlich mindestens ein weiteres Mittel zur aktiven Strömungsleitung der Lösung oder Suspension aufweist, wobei entweder das Mittel zur aktiven Strömungsleitung jeweils als Propeller ausgebildet ist, dessen Durchmesser kleiner als 50 % des Durchmessers des Hauptpropellers ist, wobei mehrere Propeller an der Welle entlang zueinander beabstandet angeordnet sind, oder wobei das Mittel zur aktiven Strömungsleitung als entlang der Welle oberhalb des Hauptpropellers verlaufende Schraube ausgebildet ist, deren Durchmesser maximal 50 % des Durchmessers des Hauptpropellers ist, wobei benachbart zu dem Hauptpropeller feststehende Prallplatten angeordnet sind.

Offenbart ist dabei ein Rührer für einen Rührreaktor, und insbesondere für einen Kristallisator, wobei an oder im unmittelbaren Bereich der Welle des Rührers mindestens ein zusätzliches aktives Strömungsleitungsmittel vorgesehen ist, welches eine aktive Strömungsleitung des Mediums, das heißt der Lösung beziehungsweise Suspension in dem Reaktorbehälter, und zwar besonders unmittelbar in der Umgebung der Welle, nach unten, das heißt zu dem Hauptpropeller des Rührers hin, bewirkt.

Offenbart ist demgemäß ein Rührer, der geeignet ist zur Umwälzung von Medium, das heißt Lösung oder Suspension in diesem Behälter. Der Rührer weist eine Welle und mindestens einen mit der Welle verbundenen Hauptpropeller zur Umwälzung des Mediums auf. Der Hauptpropeller ist in einer primären Durchmischungszone des Behälters angeordnet. Der Rührer ist erfindungsgemäß dadurch gekennzeichnet, dass an oder unmittelbar bei dessen Welle und stromaufwärts zu dem Hauptpropeller (in Bezug auf die Hauptströmungsrichtung des umgewälzten Mediums) zusätzlich mindestens ein weiteres mechanisches Mittel zur aktiven Strömungsleitung des Mediums, das heißt der Lösung oder Suspension vorhanden ist.

Bevorzugt ist das mindestens eine Mittel unmittelbar benachbart zu der primären Durchmischungszone angeordnet.

Bevorzugt sind mehrere solcher Mittel dort an der Welle entlang angeordnet, und zwar zueinander, bevorzugt regelmäßig, beabstandet.

Das Mittel ist bevorzugt unmittelbar auf der Welle selbst angeordnet. Alternativ ist es, bevorzugt unmittelbar, benachbart zu der Welle angeordnet und weist dabei insbesondere eine zu der Welle im Wesentlichen parallele Rotationsachse auf.

Der Rührer enthält aus einer im Wesentlichen in dem Reaktorbehälter zentral in Längsrichtung, das heißt in der Regel senkrecht, angeordneten rotierbaren Welle und einem damit mechanisch starr verbundenem Propeller, das heißt einem Blattrührer. Der Propeller befindet sich in dem Disperierbereich und wird über die Welle angetrieben. Er soll eine zirkuläre, insbesondere toroidale Zirkularströmung dieses Mediums in dem Behälter bewirkt werden. Im Zusammenhang mit der Anwendung in der Kristallisation sinken Lösung (Sirup) und die später im Verlauf eines Kristallisationsprozesses gebildete zähflüssige kristallhaltige Suspension (Magma) in dem zentralen Bereich des Behälters, also im Bereich der Rührerwelle schwerkraftbedingt ab in die primäre Durchmischungszone des im Wesentlichen nach unten pumpenden Hauptpropellers. Das Medium wird dort von dem Propeller erfasst und in Folge durch die meist im Wandbereich des Behälters angeordnete Heizkammer (Wärmetauscher) gepumpt.

Die Erfindung sieht also vor, an dem Rührer insbesondere zumindest unmittelbar oberhalb des Hauptpropellers, das heißt Blattrührers, also im oberen Bereich entlang der Propellerwelle, insbesondere mit dieser mechanisch verbundene, aktive Strömungsleitungsmittel, das heißt mehrere kleine Rührorgane, anzuordnen. Dadurch kann vorteilhafterweise erreicht werden, dass die Abwärtsbewegung der Lösung oder Suspension entlang der Rührerwelle signifikant unterstützt wird, um diese in der Umgebung der Welle dem Hauptpropeller zuzuführen. Erfindungsgemäß werden dadurch ansonsten auftretende unerwünschte diffuse Querströmungen im Bereich oberhalb der Heizkammer vermieden. Insbesondere können so in den letzten Phasen einer Verdampfungskristallisation, das heißt in den letzten Kochabschnitten die Wirkung des Rührwerks auf das gesamte Volumen des Kochapparates ausgeweitet werden.

Vorteilhafterweise erlaubt diese erfindungsgemäße Art der aktiven Strömungsleitung, dass auf ein an sich bekanntes strömungsleitendes Zentralrohr an dem Rührer verzichtet werden kann. Die erfindungsgemäße technische Lehre ist daher besonders vorteilhaft für die Anwendung bei der diskontinuierlichen Verdampfungskristallisation, da die Wirkung des Rührers unabhängig vom Füllstand des Behälters verbessert wird.

Der Rührer erfüllt damit zwei Aufgaben in besonderem Maße: (1.) die effiziente Dispergierung einer Kristallsuspension (Magma) und (2.) deren effiziente Durchmischung in dem Vorgang der Verdampfungskristallisation. In dieser Anwendung des Rührreaktors als diskontinuierlich betriebener Kochapparat sind diese beiden Aufgaben im zeitlichen Verlauf des Kochvorganges von unterschiedlicher Bedeutung: Die Dispergierung ist vor allem im ersten Kochabschnitt, vor allem bei Kristallgrößen unterhalb von 100 µm, von Bedeutung. Dort geht es vor allem darum, das Impfmedium, welches zur Auslösung der Kristallisation in die Lösung (Sirup) eingebracht wird, zu verteilen und eine Aggregatbildung der noch kleinen Kristalle zu vermeiden. Wichtig sind hierbei vor allem die mechanische Scherwirkung und ein großer spezifischer Leistungseintrag in die Kristallsuspension. Die Durchmischung ist vor allem im Abschnitt des sogenannten Hochkochens und Abkochens der Kristallsuspension von Bedeutung. Erreicht wird hier die Optimierung des Wärmeüberganges von den Heizelementen in die Suspension. Dies ist insbesondere von Bedeutung bei der Verwendung von energetisch niederwertigen Heizbrüden. Die effiziente Durchmischung vermeidet örtliche Unterschiede in der Zusammensetzung des Magma; dies sind insbesondere Konzentrationsunterschiede, Temperaturunterschiede oder Unterschiede in der Kristallverteilung.

In einer erfindungsgemäßen Ausgestaltung ist das mindestens eine aktive Strömungsleitungsmittel selbst in Form eines Flügelrads oder Propellers des Blattrührers ausgebildet. Dieses ist aber gegenüber dem bevorzugt einzigen Hauptpropeller wesentlich kleiner dimensioniert. Erfindungsgemäß bleibt die aktive Strömungsleitung des Mediums, das heißt der Lösung oder Suspension unmittelbar auf den Bereich um die Welle des Hauptpropellers, das heißt besonders auf die primäre Durchmischungszone, beschränkt. Überraschenderweise kann, ohne an die Theorie gebunden sein zu wollen, gerade durch die aktive Strömungsleitung im unmittelbaren Bereich um die Welle des Rührers eine hocheffiziente Verbesserung der Gesamtwirkung des Rührers erzielt werden, die besonders auch noch unabhängig vom Füllstand des Behälters ist.

Erfindungsgemäß ist wobei das Mittel zur aktiven Strömungsleitung in Form eines Propellers ausgebildet, dessen Durchmesser bevorzugt kleiner als 50 % des Durchmessers des Hauptpropellers ist. Bevorzugt beträgt der Durchmesser dieses Strömungsleitungsmittels in Form eines Flügelrads oder Propellers ein Zehntel (10 %) bis zur Hälfte (50 %), bevorzugt 15 % bis 30 % des Durchmessers des Hauptpropellers oder weniger.

Bevorzugt beträgt der Anstellwinkel des als Propeller ausgebildeten erfindungsgemäßen aktiven Strömungsleitmittels maximal 45° gegen die Horizontale (Senkrechte zur Rotationsachse), bevorzugt aber von 10 bis 30° gegen die Horizontale. Die Anzahl der Flügel beträgt erfindungsgemäß bevorzugt mindestens zwei, bevorzugt aber von vier bis sechs Flügeln.

**In** alternativer oder zusätzlicher Ausgestaltung der Erfindung ist das mindestens eine Strömungsleitungsmittel in Form einer eingängigen oder mehrgängigen Transportschraube (Schnecke) ausgebildet und bevorzugt derart dimensioniert, dass sich die strömungsleitende Wirkung dieser Schnecke ebenfalls auf die unmittelbare Umgebung der Welle des Hauptpropellers, das heißt besonders auf die primäre Durchmischungszone, beschränkt.

Erfindungsgemäß beträgt der Durchmesser der Schnecke maximal 50 % des Durchmessers des Hauptpropellers. Bevorzugt beträgt der Durchmesser der Schnecke mindestens 5 % bis maximal 50 % des Durchmessers des Hauptpropellers, bevorzugt von 15 bis 30 % des Durchmessers. Die Anstellwinkel der Schneckenflügel betragen bevorzugt maximal 45° gegen die Horizontale (Senkrechte zur Rotationsachse), bevorzugt aber von 10° bis 30°.

In einer nicht erfindungsgemäßen Ausgestaltung der Erfindung beträgt der Durchmesser des Mittels zur aktiven Strömungsleitung 50 % bis 80 % des Durchmessers des Hauptpropellers ist.

Grundsätzlich ist gemäß der Erfindung also vorgesehen, dass, unabhängig von der konkreten Ausgestaltung des oder der Strömungsleitungsmittel an der Welle, die bewirkte aktive Strömungsleitung auf die unmittelbare Umgebung um die Welle des Rührwerks beschränkt ist. Ein weiterer großer Propeller an der Welle, der ähnlich dimensioniert ist wie der Hauptpropeller, ist daher erfindungsgemäß als zusätzliches aktives Strömungsleitungsmittel des Rührers ausgeschlossen.

Erfindungsgemäß ist das aktiv strömungsleitende Mittel so gestaltet, dass eine Unterstützung der Strömungsleitung der Lösung oder Suspension, worin diese eintauchen, dem primären Nettostrom der zirkulären Strömung des Mediums folgend zu dem Hauptpropeller hin erfolgt. Dazu ist vorgesehen, dass sich das Mittel zur aktiven Strömungsleitung bei der Welle stromaufwärts und bevorzugt in unmittelbarer Nachbarschaft des Hauptpropellers, das heißt besonders nahe der primären Durchmischungszone, befindet, um dies zu bewirken. Die strömungsleitende Wirkung des erfindungsgemäßen aktiven Mittels auf das Medium überlappt dabei mit der Durchmischungszone des Hauptpropellers. In der Strömungsrichtung auf den Hauptpropeller hin gerichtetes Medium wird so quasi in die primäre Durchmischungszone übergeben.

Bevorzugt beträgt der Abstand eines als Propeller ausgebildeten aktiven Strömungsleitmittels zu dem Hauptpropeller maximal etwa das 1,5fache des Durchmessers des aktiven Strömungsleitungsmittels und entspricht bevorzugt maximal genau dem Durchmesser des aktiven Strömungsleitungsmittels. Ist das erfindungsgemäße aktive Strömungsleitungsmittel in der alternativen Ausgestaltung als einoder mehrgängige Schnecke ausgebildet, so beträgt der Abstand des Beginns der Schnecke an der Rührerwelle zu dem Hauptpropeller maximal etwa dem Durchmesser der Schnecke, bevorzugt beträgt der Abstand jedoch nur etwa 10 % des Durchmessers, besonders bevorzugt beginnt die Schnecke unmittelbar an dem Hauptpropeller.

Bevorzugt sind mehrere, das heißt mindestens zwei oder drei solcher Strömungsleitungsmittel an der und um die Rührerwelle ausgebildet und werden von dieser angetrieben. Diese sind entlang der Welle voneinander beabstandet angeordnet, und zwar bevorzugt regelmäßig. Dabei ist vorgesehen, dass je nach Füllstand in dem Behälter mehr oder weniger der an der Rührerwelle angeordneten Strömungsleitungsmittel mit der Lösung oder Suspension in Eingriff kommen, um die aktive Strömungsleitung zu bewirken. Strömungsleitungsmittel, die sich oberhalb des aktuellen Spiegels der Lösung oder Suspension im Behälter, also im Brüdenraum befinden, laufen leer; lediglich diejenigen, die in die Lösung oder Suspension eintauchen bewirken die aktive Strömungsleitung.

Besonders ist vorgesehen, die aktiv strömungsleitenden Mittel so auf der Rührerwelle zueinander zu beabstanden, dass sich ihre jeweiligen Wirkungsbereiche der Strömungsleitung der Suspension überlagern. Das in der Strömungsrichtung auf den Hauptpropeller hin, also an der Rührerwelle entlang gerichtetes Medium wird so quasi im Sinne einer Eimerkette von einem aktiv strömungsleitenden Mittel zum nächsten und schließlich in die primäre Durchmischungszone des Hauptpropellers hinein übergeben. Bevorzugt ist vorgesehen, die aktiven strömungsleitenden Mittel zueinander in einem Abstand anzuordnen, der maximal etwa dem 1,5fachen deren Durchmessers beträgt, bevorzugt entspricht der Abstand der aktiven strömungsleitenden Mittel zueinander ihrem Durchmesser oder der Abstand ist geringer.

**In** einer bevorzugten Ausgestaltung sind die Mittel regelmäßig zueinander beabstandet. Alternativ bevorzugt sind die Abstände der Mittel mit zunehmender Entfernung von dem Hauptpropeller, bzw. zu der primären Durchmischungszone, vergrößert. Vorteilhafterweise kann so die Strömungsleitung zu dem Hauptpropeller hin verbessert werden. Ohne an die Theorie gebunden sein zu wollen, kann so der Volumenstrom der erfindungsgemäßen zusätzlichen aktiven Strömungsleitung mit zunehmender Entfernung von dem Hauptpropeller, bzw. zu der primären Durchmischungszone, reduziert und an die lokalen Ausgleichsströmungen angepasst werden, was die Ausbildung der gewünschten toroidalen Zirkularströmung in dem Reaktorbehälter unterstützt.

Alternativ oder zusätzlich kann die aktiven Strömungsleitung mit zunehmender Entfernung von dem Hauptpropeller, bzw. von der primären Durchmischungszone, dadurch angepasst werden, dass die mechanische Pumpwirkung des Mittels selbst, insbesondere der Anstellwinkel der Blätter der Propeller oder der Schneckengänge und/oder der Durchmesser des Mittels, individuell in Abhängigkeit von dessen Abstand zu Hauptpropeller oder Durchmischungszone, gewählt wird. Diese Anpassung der aktiven Strömungsleitung mit zunehmender Entfernung von dem Hauptpropeller besteht bevorzugt in einer Reduzierung der Pumpwirkung mit Abstand zu dem Hauptpropeller. **In** einer alternativen Ausgestaltung ist, je nach geometrischer Ausgestaltung oder Orientierung des Behälters und den lokal herrschenden spezifischen Strömungsverhältnissen, vorgesehen, dass die Pumpwirkung der jeweiligen Mittel mit Abstand zu dem Hauptpropeller erhöht ist. Bevorzugt ist eine Variante, worin die individuelle Pumpleistung der einzelnen aktiv strömungsleitenden Mittel mit Abstand zu dem Hauptpropeller abnimmt, aber bei den zu dem Brüdenraum benachbarten "oberen" Mitteln wieder zunimmt. Es ist besonders vorgesehen, das Profil der Pumpwirkung der entlang der Rührerwelle angeordneten aktiv strömungsleitenden Mittel spezifisch an die Ausgestaltung oder Orientierung des Behälters und/oder an die Art des Betriebs, insbesondere an den diskontiniuerlichen Betrieb, und/oder an die rheologischen Eigenschaften des Mediums/Magmas anzupassen. Diese Anpassung geschieht einmalig der Planung und Fertigung der Rührerwelle. Alternativ oder zusätzlich sind Mittel vorgesehen, die Pumpwirkung des oder der aktiv strömungsleitenden Mittel spezifisch im Betrieb anzupassen. Dies kann durch an sich bekannte Verstellmechanismen (siehe unten) oder durch austauschbare Elemente an den aktiv strömungsleitenden Mittel, z.B. der Propellerflügel, erfolgen.

Das mindestens eine aktiv strömungsleitende Mittel ist mit der, im Betriebszustand rotierenden, Welle mechanisch direkt oder mittelbar verbunden, um die aktive Strömungsleitung durch das oder die Mittel zu erzielen, wobei sich der spezifische Energieeintrag an der Welle auf den Hauptpropeller und das erfindungsgemäße weitere Mittel zur aktiven Strömungsleitung verteilt.

Besonders ist das aktiv strömungsleitende Mittel unmittelbar auf der Welle des Hauptpropellers angeordnet und mit dieser mechanisch verbunden, dass das Mittel von der Welle direkt antreibbar ist. Die mechanische Verbindung ist bevorzugt starr.

Alternativ erfolgt der Antrieb über an sich bekannte Getriebe wie Planetengetriebe und/oder über koaxiale mehrteilige Wellen.

**In** einer Ausführung der Erfindung ist der spezifische Energieeintrag für die strömungsleitende Wirkung des Mittels steuerbar, besonders durch Variabilität des Anstellwinkels des Rührblatts eines als Propeller ausgebildeten Mittels und/oder durch Variabilität der mechanischen Übersetzung des Antriebs des Mittels, vor allem im Zusammenhang mit Ausführungen mit Planetengetriebe und/oder koaxialen mehrteiligen Rührerwellen.

Alternativ weisen die aktiv strömungsleitenden Mittel eine eigene Welle mit vollständig separater Mechanik auf, so dass der Energieeintrag somit separat steuerbar ist.

Das aktive Strömungsleitungsmittel bewirkt an der Propellerwelle überraschenderweise einen Zusammenbruch dort ansonsten auftretender unerwünschter turbulenter Strömungen. Es bewirkt eine zielgerichtete Abwärtsströmung in der Umgebung der Propellerwelle, ohne dass es wesentlich mehr mechanischer Arbeit und damit höherer spezifischer Energie bedarf, als dies beispielsweise durch einen zweiten, ähnlich zu dem ersten Hauptpropeller dimensionierten Hauptpropeller an der Welle der Fall wäre. Es zeigt sich, dass insbesondere durch klein dimensionierte und entlang der Propellerwelle repetitiv ausgeführte aktiv strömungsleitende Strukturen wie kurze Propellerflügel oder durch unterbrochene Schraubengänge eine hoch effiziente Strömungsleitung an der Welle und in Folge eine stabile toroidalen Strömung der Lösung und Suspension durch den Behälter erreicht werden kann, Es wird mit geringem zusätzlichem mechanischem Aufwand zum Antrieb des Rührwerks die Pumpwirkung des Hauptpropellers und damit die Effizienz des gesamten Prozesses insbesondere der Verdampfungskristallisation verbessert. Vor allem ist die Dispersion der gebildeten kristallhaltigen Suspension verbessert. Dies führt zu einer Verringerung des spezifischen Gesamtenergieeintrags in den Kristallisator bei gleicher Mischgüte, beziehungsweise zu einer Verbesserung des Mischgüte bei unverändertem spezifischen Gesamtenergieeintrag in den Kristallisator.

Offenbart ist auch ein Rührreaktor, besonders aber ein Kristallisator, besonders für die diskontinuierlichen Verdampfungskristallisation, welcher den hier beschriebenen verbesserten Rührer enthält.

Offenbart ist auch die Lehre der Verwendung mindestens eines aktiv strömungsleitenden Mittels, wie hierin charakterisiert, an einer Welle eines Rührers eines Kristallisators, zur Verbesserung von dessen Durchmischungsleistung. Eine besondere Anwendung ist in einem Verdampfungskristallisator zur Aufrechterhaltung der Durchmischungsleistung des Rührers bei der diskontinuierlichen Verdampfungskristallisation auch bei wechselnden Füllungsgraden des Kristallisatorbehälters.

Die Erfindung wird durch die nachfolgende Figur näher beschrieben, ohne dass diese beschränkend zu verstehen wäre:

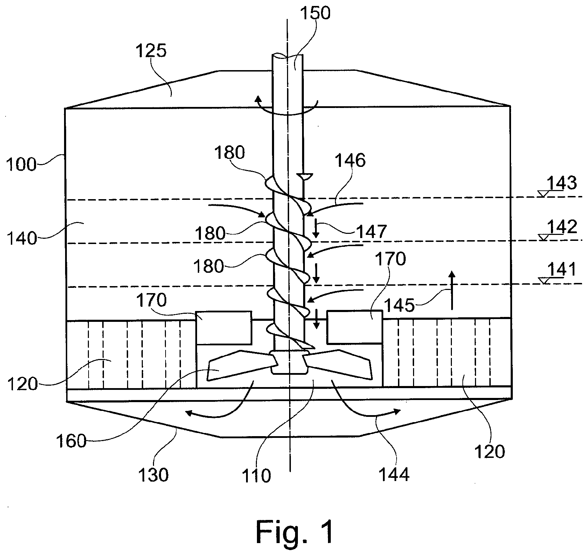

Figur 1 zeigt eine schematische Darstellung eines gattungsgemäßen Verdampfungskristallisators mit vertikalem Reaktorbehälter 100. Dieser enthält im unteren Bereich Lösung oder Suspension 140, woraus das Kristallprodukt gewonnen werden soll. Am oberen Ende befindet sich der Brüdenraum 125 mit Dampfabzug. Durchströmbare Heizelemente (Wärmetauscher) 120 sind in dem unteren Bereich des Behälters angeordnet. In den Behälter 100 ist von oben her eine Rührerwelle 150 im Wesentlichen vertikal (lotrecht) eingehängt. In einer primären Durchmischungszone 110, hier: unmittelbar an dem unteren Ende der Welle, ist ein Hauptpropeller, das heißt Blattrührer 160 angeordnet ist, der bei Rotation der Antriebswelle 150 die sich in dem Behälter befindliche Lösung oder Suspension primär nach unten und in Richtung Behälterboden pumpt. Durch das bodenseitige Prallblech 130 an dem Behälter 100 wird die nach unten gerichtete Strömung 144 der Lösung oder Suspension in die Heizkammern 120 gelenkt. Durch die aktive Pumpwirkung und unterstützt durch eine Dichteverminderung durch das Aufheizen der Lösung oder Suspension in der Heizkammer 120 sowie durch entstehende Dampfblasen verlässt diese die Heizkammer im Wesentlichen in senkrecht nach oben 145. Unterstützt wird die Pumpwirkung des Hauptpropellers 160 durch dazu benachbart angeordnete feststehende Prallplatten 170. Erfindungsgemäß sind an der Antriebswelle 150 entlang oberhalb des Hauptpropellers 160 aktiv strömungsleitende Mittel 180 vorgesehen, die in unmittelbarer Umgebung der Antriebswelle 150 eine in Richtung der Antriebswelle nach unten verlaufende aktive Strömung 147 der Lösung oder Suspension zu dem Hauptpropeller 160 hin bewirken. Dadurch wird die Wirkung des Rührwerks effizient unterstützt. Es bildet sich über die Ausgleichsströmung 146 eine stabile zirkuläre Strömung 144, 145, 146, 147 aus. Je nach Füllstand 141, 142 oder 143 der Lösung oder Suspension 140 in den Reaktorbehälter 100 kommen mehr oder weniger Abschnitte oder Einheiten der Strömungsleitmittel 180 mit dieser in Eingriff. Der spezifische Gesamtenergieantrag an der Welle 150 ist dadurch stets an den Füllstand 141, 142 oder 143 angepasst.

## Patentansprüche

1. Verdampfungskristallisator, enthaltend:
- einen vertikalen Reaktorbehälter (100);
- eine im unteren Bereich des Behälters (100) angeordnete Heizkammer (120); und
- einen Rührer, zur Umwälzung von zu kristallisierender Lösung oder Suspension (140) in dem Behälter (100) und Zufuhr in die Heizkammer (120), mit einer von oben her vertikal eingehängten Welle (150) und einem unmittelbar an dem unterem Ende der Welle (150) verbundenen, in einer primären Durchmischungszone (110) des Behälters (100) angeordneten Hauptpropeller (160),
wobei der Rührer an dieser Welle (150) zu dem Hauptpropeller (160) zusätzlich mindestens ein weiteres Mittel (180) zur aktiven Strömungsleitung der Lösung oder Suspension (140) aufweist,
wobei entweder das Mittel (180) zur aktiven Strömungsleitung jeweils als Propeller ausgebildet ist, dessen Durchmesser kleiner als 50 % des Durchmessers des Hauptpropellers (160) ist, wobei mehrere Propeller an der Welle (150) entlang zueinander beabstandet angeordnet sind, oder
wobei das Mittel (180) zur aktiven Strömungsleitung als entlang der Welle (150) oberhalb des Hauptpropellers (160) verlaufende Schraube ausgebildet ist, deren Durchmesser maximal 50 % des Durchmessers des Hauptpropellers (160) ist,
**dadurch gekennzeichnet, dass** benachbart zu dem Hauptpropeller (160) feststehende Prallplatten (170) angeordnet sind.

2. Verdampfungskristallisator nach Anspruch 1, wobei das mindestens eine Mittel (180) unmittelbar benachbart zu der primären Durchmischungszone (110) angeordnet ist.

3. Verwendung eines Verdampfungskristallisators, charakterisiert in einem der Ansprüche 1 und 2, im diskontinuierlichen Betrieb zur Verbesserung von dessen Durchmischungsleistung.

4. Verwendung eines Verdampfungskristallisators, charakterisiert in einem der Ansprüche 1 und 2, zur Aufrechterhaltung der Durchmischungsleistung des Rührers bei einer diskontinuierlichen Verdampfungskristallisation bei wechselnden Füllungsgraden des Kristallisatorbehälters.

## Claims

1. A crystallizing evaporator including:
- a vertical reactor vessel (100);
- a heating chamber (120) arranged in the lower region of the vessel (100); and
- a stirrer for circulating a solution or suspension (140) to be crystallized in the vessel (100) and directing it into the heating chamber (120), having a shaft (150) suspended vertically from the top and a main propeller (160) connected directly to the lower end of the shaft (150) and arranged in a primary mixing zone (110) of the vessel (100),
wherein the stirrer further has on this shaft (150) and upstream of the main propeller (160) at least one further means (180) for active flow conducting of the solution or suspension (140),
wherein either the means (180) for active flow conducting is each designed as a propeller, whose diameter is less than 50% of the diameter of the main propeller (160), wherein a plurality of propellers (182) are arranged at a distance from each other along the shaft (150), or
wherein the means (180) for active flow conducting is designed as a screw running along the shaft (150) above the main propeller (160), which diameter is at most 50% of the diameter of the main propeller (160),
**characterised in that** fixed baffle plates (170) are arranged adjacent to the main propeller (160).

2. The crystallizing evaporator of claim 1, wherein the at least one means (180) is arranged directly adjacent to the primary mixing zone (110).

3. Use of a crystallizing evaporator **characterised in** one of claims 1 and 2 in discontinuous operation for improving the mixing capacity thereof.

4. Use of a crystallizing evaporator **characterised in** one of claims 1 and 2 for maintaining the mixing capacity of the stirrer during a discontinuous evaporation crystallization at varying levels of filling of the crystalliser vessel.

## Revendications

1. Un cristallisateur à évaporation incluant :
- une cuve de réacteur verticale (100) ;
- une chambre de chauffage (120) agencée dans la région inférieure de la cuve (100) ; et
- un agitateur pour la circulation d'une solution ou d'une suspension (140) à cristalliser dans la cuve (100) et sa direction dans la chambre de chauffage (120), ayant un arbre (150) suspendu verticalement depuis le haut et une hélice principale (160) connectée directement à l'extrémité inférieure de l'arbre (150) et agencée dans une zone de mélange primaire (110) de la cuve (100),
dans lequel l'agitateur a en plus sur cet arbre (150) et en amont de l'hélice principale (160) au moins un autre moyen (180) pour la conduite active du flux de la solution ou de la suspension (140),
dans lequel le moyen (180) pour la conduite active du flux est formé d'une hélice dont le diamètre est inférieur de 50 % au diamètre de l'hélice principale (160), dans lequel plusieurs hélices (182) sont agencées à une certaine distance les unes des autres le long de l'arbre (150), ou
dans lequel le moyen (180) pour la conduite active du flux est formé d'une vis courant le long de l'arbre (150) au-dessus de l'hélice principale (160), dont le diamètre est au plus de 50 % du diamètre de l'hélice principale (160),
**caractérisé en ce que** des plaques déflectrices fixes (170) sont agencées adjacentes à l'hélice principale (160).

2. Le cristallisateur à évaporation de la revendication 1, dans lequel le au moins un moyen (180) est agencé directement adjacent à la zone de mélange primaire (110).

3. Utilisation d'un cristallisateur à évaporation caractérisé dans l'une des revendications 1 et 2, en manœuvre discontinue pour l'amélioration de sa capacité de mélange.

4. Utilisation d'un cristallisateur à évaporation caractérisé dans l'une des revendications 1 et 2 pour la maintenance de la capacité de mélange de l'agitateur au cours d'une cristallisation par évaporation discontinue à des niveaux variables de remplissage de la cuve du cristallisateur.
